# EUROPÄISCHE PATENTANMELDUNG

(11) **EP 2 353 924 A2**
(43) Veröffentlichungstag der Anmeldung: **10.08.2011**
(21) Anmeldenummer: 11153189.3
(22) Anmeldetag: 03.02.2011
(51) Int. Cl.: B60L 11/18

(54) **Ladesystem und Verfahren zum Laden von Elektrofahrzeugen**

(30) Priorität: 09.02.2010 DE 102010001709
(71) Anmelder: Deutsches Zentrum für Luft- und Raumfahrt e.V., 51147 Köln (DE)
(72) Erfinder: Brinner, Andreas, 71277 Rutesheim (DE); Hinow, Christo, 5300 Gabrowo (BG); Hinow, Georg, 01279 Dresden (DE)
(74) Vertreter: Hoeger, Stellrecht & Partner Patentanwälte

(57) **Zusammenfassung**

Es wird ein Ladesystem für Elektrofahrzeuge vorgeschlagen, welches eine zentrale Leistungsumrichtereinrichtung und eine Mehrzahl von räumlich verteilten Ladestationen mit jeweiligen Ladeeinrichtungen umfasst, wobei die jeweiligen Ladeeinrichtungen von der zentralen Leistungsumrichtereinrichtung mit elektrischer Energie versorgt sind, wobei eine Ladestation zur kontaktlosen elektrischen Energieübertragung an ein Elektrofahrzeug ausgebildet ist, eine Ladestation eine Datensende-/empfangseinrichtung für den Datenaustausch mit einem Elektrofahrzeug umfasst, eine Ladestation eine Datenverarbeitungseinrichtung umfasst, welche mit einer Datensende-/empfangseinrichtung in Wirkverbindung steht, und eine Ladestation einen Umrichter umfasst.

## Beschreibung

Die Erfindung betrifft ein Ladesystem für Elektrofahrzeuge.

Die Erfindung betrifft ferner ein Verfahren zum (elektrischen) Laden von Elektrofahrzeugen.

Aus der US 2005/0178632 A1 ist ein System zur Aufladung von Elektrofahrzeugen bekannt, welches ein Netzwerk umfasst, über welches ein Fahrzeug fährt. Das Elektrofahrzeug umfasst ein oder mehrere Energiespeicherelemente, die schnell geladen werden können.

Aus der US 5,926,004 ist ein Batterieladegerät für das Laden eines Fahrzeuges bekannt.

Dem eingangs genannten Ladesystem und dem eingangs genannten Verfahren liegt die Aufgabe zugrunde, das elektrische Laden von Elektrofahrzeugen auf effektive und flexible Weise durchführen zu können.

Diese Aufgabe wird bei dem eingangs genannten Ladesystem erfindungsgemäß dadurch gelöst, dass eine zentrale Leistungsumrichtereinrichtung vorgesehen ist und eine Mehrzahl von räumlich verteilten Ladestationen mit jeweiligen Ladeeinrichtungen vorgesehen sind, wobei die jeweiligen Ladeeinrichtungen von der zentralen Leistungsumrichtereinrichtung mit elektrischer Energie versorgt sind, eine Ladestation zur kontaktlosen elektrischen Energieübertragung an ein Elektrofahrzeug ausgebildet ist, eine Ladestation eine Datensende-/empfangseinrichtung für den Datenaustausch mit einem Elektrofahrzeug umfasst, eine Ladestation eine Datenverarbeitungseinrichtung umfasst, welche mit einer Datensende-/empfangseinrichtung in Wirkverbindung steht, und eine Ladestation einen Umrichter umfasst.

Bei der erfindungsgemäßen Lösung ist die zentrale Leistungsumrichtereinrichtung gleichzeitig mit einer Mehrzahl von räumlich verteilten Ladestationen verbunden. Die zentrale Leistungsumrichtereinrichtung stellt elektrische Energie in einer für die Übertragung an die Ladestation optimierten Form bereit, so dass insbesondere elektrische Leistungsverluste bei der Übertragung minimiert sind. Ferner sind vorteilhafterweise die Investitionskosten für die Verkabelung zwischen der Leistungsumrichtereinrichtung und den Ladestationen minimiert.

An den Ladestationen mit den jeweiligen Ladeeinrichtungen lässt sich eine kontaktlose Wiederaufladung von Batteriesätzen eines jeweiligen Elektrofahrzeugs durchführen. Eine Erstaufladung oder Wiederaufladung lässt sich optimieren. Eine Ladestation lässt sich auf einfache Weise anpassen. Insbesondere lässt sich die Aufladung eines Elektrofahrzeugs steuern.

Durch die kontaktlose elektrische Energieübertragung ist der Bedienungsaufwand minimiert. Das erfindungsgemäße Ladesystem ist auch für nicht durch Bedienerpersonen gesteuerte Elektrofahrzeuge geeignet.

Der Beladungsvorgang ist an sich verschleißfrei, da keine beweglichen Teile kontaktiert und bedient werden müssen und insbesondere keine Stecker-Anschluss-Einrichtungen vorgesehen werden müssen.

Durch das Vorsehen einer Mehrzahl von räumlich verteilten Ladestationen lässt sich ein Raumbereich optimiert nutzen. Beispielsweise können Warteplätze oder Parkplätze für Elektrofahrzeuge mit Ladestationen versehen werden, so dass während Nichtbewegungszeiten eines Fahrzeugs (beispielsweise beim Aufladen und Abladen von Gütern) Batteriesätze wieder aufgeladen werden.

Die zentrale Leistungsumrichtereinrichtung ist insbesondere an ein (öffentliches) Versorgungsnetz gekoppelt, welches beispielsweise elektrische Energie auf einem Spannungsniveau von 250/400 Volt als Wechselspannung mit einer Frequenz von 50 Hz bereitstellt. Dadurch lässt sich das erfindungsgemäße Ladesystem auf einfache Weise realisieren.

Besonders vorteilhaft ist es, wenn die zentrale Leistungsumrichtereinrichtung elektrische Leistung auf einem höheren Spannungsniveau und/oder mit einer höheren Frequenz bereitstellt im Vergleich zum Versorgungsnetz. Dadurch lassen sich Strom-Transportverluste minimieren. Die Investitionskosten für eine Verkabelung lassen sich ferner optimieren.

Insbesondere stellt die zentrale Leistungsumrichtereinrichtung Spannung auf einem Spannungsniveau im Bereich zwischen 500 V und 1500 V bereit. Beispielsweise werden Spannungen auf einem Spannungsniveau in der Größenordnung von 1000 V bereitgestellt.

Es ist günstig, wenn die Leistungsumrichtereinrichtung den Ladeeinrichtungen elektrische Energie einer Frequenz im Bereich zwischen 10 kHz und 60 kHz bereitstellt und insbesondere im Bereich zwischen 20 kHz und 40 kHz bereitstellt.

Es ergibt sich eine zeitoptimierte Ladung von Batteriesätzen von Elektrofahrzeugen, wenn die Ladestation an Parkplätzen oder Warteplätzen für Elektrofahrzeuge angeordnet sind. Dadurch lässt sich beim "normalen" Warten oder Parken ein Elektrofahrzeug kontaktlos wiederaufladen.

Günstig ist es, wenn eine Ladestation eine Kontaktplatte aufweist. Die Kontaktplatte ist insbesondere überfahrbar. Dadurch ist auf einfache Weise eine korrekte Positionierung eines Elektrofahrzeugs an einer Ladestation bezüglich der elektrischen Energieübertragung möglich. Durch die Kontaktplatte lassen sich auch elektrische und elektronische Komponenten und gegebenenfalls auch mechanische Komponenten einer Ladestation schützen.

Ganz besonders vorteilhaft ist es, wenn die Ladeeinrichtungen und insbesondere die Ladestationen in einen befahrbaren Boden integriert sind. Dadurch lassen sich die Ladestationen auch an Fahrwegen für Elektrofahrzeuge anordnen. Es wird dadurch der Fahrbetrieb durch die Ladestation nicht gestört.

Die Ladestationen selber stellen dann keine Hindernisse für Elektrofahrzeug dar.

Es ist ferner günstig, wenn Verbindungsleitungen zu den Ladestationen in einem Boden verlegt sind. Dadurch stellen die Verbindungsleitungen keine Hindernisse für Fahrwege des Elektrofahrzeugs dar. Es können dabei Verbindungsleitungen für die Übertragung elektrischer Leistung und/oder für die Übertragung von Daten in dem Boden verlegt sein.

Es ist günstig, wenn der Boden mindestens im Bereich der Ladestation mit einer Bodenheizung versehen ist und/oder überdacht ist. Durch die Überdachung lassen sich die Ladestationen vor Umwelteinflüssen schützen. Die erfindungsgemäße Lösung ist grundsätzlich auch im Außenraum einsetzbar. Durch Vorsehen einer Bodenheizung lassen sich Wasseransammlungen im Bereich einer Ladeeinrichtung verhindern, um so die elektrische Energieübertragung zu ermöglichen.

Günstig ist es, wenn einer Ladestation eine Fahrzeugpositionierungseinrichtung zugeordnet ist. Durch die Fahrzeugpositionierungseinrichtung lässt sich ein Elektrofahrzeug bezüglich einer Ladestation so exakt positionieren und diese Position lässt sich gegebenenfalls fixieren, dass eine elektrische Energieübertragung möglich ist. Beispielsweise umfasst eine Fahrzeugpositionierungseinrichtung Schienen zur Führung eines Elektrofahrzeugs.

Günstig ist es, wenn die zentrale Leistungsumrichtereinrichtung in einem abgeschirmten Raum angeordnet ist. Dadurch ist der Einfluss auf andere Systeme und insbesondere elektrische Systeme im Bereich des Ladesystems minimiert.

Ganz besonders vorteilhaft ist es, wenn eine Ladestation eine Datensende-/empfangseinrichtung für den Datenaustausch mit einem Elektrofahrzeug umfasst. Dadurch ist ein bidirektionaler Datenaustausch zwischen einem Elektrofahrzeug und einer Ladestation möglich. Es ergibt sich eine Vielzahl von Möglichkeiten. Der Datenaustausch kann dabei technische Aspekte und kommerzielle Aspekte umfassen. Beispielsweise erfolgt ein Datenaustausch, um Abrechnungsdaten bezüglich der übertragenen Energiemenge bereitzustellen. Über den Datenaustausch lässt sich beispielsweise auch ein Ladevorgang steuern. Über einen Datenaustausch kann beispielsweise ein Elektrofahrzeug Informationen über seinen Batteriesatz der Ladestation bereitstellen, wobei dann die Ladestation in Abhängigkeit von dem Batteriesatztypus den Beladungsvorgang durchführt. Über den Datenaustausch ist es beispielsweise auch möglich zu erkennen, ob ein Elektrofahrzeug abfahren will. Wenn beispielsweise solch eine Absicht erkannt wird, kann die Abfahrbewegung durch Eingriff an dem Elektrofahrzeug verzögert werden, um die Beladung abschließen zu können. Der Datenaustausch kann auch die Speicherung der "Beladungsgeschichte" eines Batteriesatzes eines bestimmten Elektrofahrzeuges ermöglichen. Dadurch wiederum kann über die Lebensdauer des Batteriesatzes gesehen die Ladung optimiert werden. Beispielsweise können Regenerationszyklen oder dergleichen eingeschoben werden.

Bei einem Ausführungsbeispiel ist eine zentrale Datenverarbeitungseinrichtung vorgesehen. Die zentrale Datenverarbeitungseinrichtung kann dann von den Ladestationen drahtlos oder verdrahtet bereitgestellte Daten zumindest teilweise auswerten.

Günstig ist es, wenn eine Ladestation eine Schaltereinrichtung zum Einschalten und Abschalten der Ladestation bezüglich der Bereitstellung von elektrischer Energie zu einem Elektrofahrzeug umfasst. Dadurch ist beispielsweise der Normalzustand einer Übertragungsspuleneinrichtung einer Ladestation stromlos beziehungsweise spannungslos. Wenn ein korrekt positioniertes Elektrofahrzeug erkannt wird und beispielsweise auch der Batteriesatztyp erkannt wird, kann durch Betätigung der Schaltereinrichtung eine automatisierte Beladung erfolgen. Über die Schaltereinrichtung lässt sich auch eine Sicherheitseinrichtung realisieren. Wenn beispielsweise das Überschreiten von Stromschwellen oder Spannungsschwellen oder beispielsweise das Überschreiten von Stromgradienten oder Spannungsgradienten erkannt wird, dann kann die Stromzufuhr zu einer Übertragungsspuleneinrichtung unterbrochen werden.

Günstig ist es, wenn eine Ladestation einen Umrichter und insbesondere gesteuerten Umrichter umfasst. Dadurch lässt sich beispielsweise ein Ladevorgang eines Elektrofahrzeugs in Abhängigkeit von einem Batteriesatz des Elektrofahrzeugs durchführen. Durch entsprechende Ansteuerung des Umrichters lässt sich der optimierte Ladevorgang durchführen.

Insbesondere umfasst eine Ladestation eine Übertragungsspuleneinrichtung zur drahtlosen Energieübertragung. Es lässt sich dadurch induktiv elektrische Energie an ein Elektrofahrzeug kontaktlos übertragen.

Es ist ferner günstig, wenn eine Ladestation eine Datenverarbeitungseinrichtung umfasst, welche mit einer Datensende-/empfangseinrichtung in Wirkverbindung steht. Die Datenverarbeitungseinrichtung kann mindestens teilweise eine Datenverarbeitung durchführen, um beispielsweise einen Umrichter so anzusteuern, dass für einen bestimmten Batteriesatz ein optimierter Ladevorgang realisiert wird. Der Typ des Batteriesatzes kann wiederum von dem Elektrofahrzeug über eine dortige Datensende-/empfangseinrichtung der Ladestation mitgeteilt werden.

Ganz besonders vorteilhaft ist es, wenn eine Ladestation eine Sicherheitseinrichtung aufweist, welche eine Strom- und/oder Spannungsmesseinrichtung umfasst und welche eine Schaltereinrichtung zur Unterbrechung des Stromflusses umfasst. Wenn das Überschreiten einer Schwelle beziehungsweise eines absoluten Werts oder eines Gradienten erkannt wird, kann dann eine Notabschaltung durchgeführt werden. Eine solche Notabschaltung ist beispielsweise sinnvoll, wenn erkannt wird, dass ein Elektrofahrzeug während eines Ladevorgangs bewegt wird.

Insbesondere umfasst ein Elektrofahrzeug eine Empfangsspuleneinrichtung für die elektrische Leistungsübertragung. Die Empfangsspuleneinrichtung kooperiert mit einer Übertragungsspuleneinrichtung einer Ladestation. Es lässt sich dadurch induktiv elektrische Energie kontaktlos übertragen.

Günstig ist es, wenn ein Elektrofahrzeug einen Gleichrichter aufweist. Dieser Gleichrichter stellt eine Gleichspannung zur Beladung eines Batteriesatzes bereit.

Es ist günstig, wenn ein Elektrofahrzeug eine Datensende-/empfangseinrichtung zum Datenaustausch mit einer Ladestation aufweist. Die Datensende-/empfangseinrichtung kann beispielsweise der Ladestation Informationen über einen Batteriesatztyp des Elektrofahrzeugs bereitstellen. Dem Elektrofahrzeug können beispielsweise Daten bezüglich des Ladevorgangs bereitgestellt werden, so dass an dem Elektrofahrzeug die "Ladungsgeschichte" speicherbar ist. Es ergibt sich eine Vielzahl weiterer Möglichkeiten bezüglich des Datenaustauschs.

Es ist dann auch günstig, wenn ein Elektrofahrzeug eine Datenverarbeitungseinrichtung aufweist. Dadurch ist ein flexibler Einsatz möglich. Ein Elektrofahrzeug kann dann beispielsweise erkennen, ob es steht oder bewegt wird beziehungsweise ob eine Bewegung bevorsteht. Beispielsweise erhält die Datenverarbeitungseinrichtung Informationen über eine Pedalbetätigung beziehungsweise über eine Zündschlossbetätigung.

Das erfindungsgemäße Ladesystem lässt sich vorteilhafterweise für den innerbetrieblichen Warenverkehr oder Güterverkehr oder Personenverkehr einsetzen. Wenn beispielsweise feste Warteplätze oder Parkplätze vorliegen, kann dies optimiert für die Beladung genutzt werden.

Die eingangs genannte Aufgabe wird bei dem eingangs genannten Verfahren erfindungsgemäß dadurch gelöst, dass eine zentrale Leistungsumrichtereinrichtung, welche an ein Versorgungsnetz gekoppelt ist, an räumlich verteilte Ladestationen unter Spannungserhöhung und Frequenzerhöhung im Vergleich zu dem Versorgungsnetz elektrische Energie liefert, und ein Elektrofahrzeug an einer Ladestation kontaktlos elektrische Energie entnehmen kann, wobei an einer Ladestation ein Datenaustausch mit dem Elektrofahrzeug durchgeführt wird und der Datenaustausch mindestens einen der folgenden Datentypen umfasst: Freigabe und Abschaltung der Energieübertragung, Steuerung der Energieübertragung, Batteriesatzdaten, Bewegung des Elektrofahrzeuges, Abrechnungsdaten.

Das erfindungsgemäße Verfahren wurde bereits im Zusammenhang mit dem erfindungsgemäßen Ladesystem erläutert.

Insbesondere wird an einer Ladestation ein Datenaustausch mit dem Elektrofahrzeug durchgeführt, wobei vorzugsweise der Datenaustausch bidirektional ist. Dadurch ergeben sich umfangreiche Möglichkeiten zur Optimierung des Ladeverfahrens und auch zur Auswertung davon.

Beispielsweise umfasst der Datenaustausch mindestens einen der folgenden Datentypen: Freigabe und Abschaltung der Energieübertragung, Steuerung der Energieübertragung, Batteriesatzdaten, Bewegen des Elektrofahrzeugs, Abrechnungsdaten. Wenn beispielsweise eine korrekte Positionierung des Elektrofahrzeugs bezüglich einer Ladestation erreicht ist, lässt sich die Energieübertragung freigeben, wobei diese Freigabe über einen Datenaustausch initiiert wird. Beispielsweise lässt sich die korrekte Positionierung auch durch korrekte Positionierung einer Datensende-/empfangseinrichtung des Elektrofahrzeugs bezüglich einer korrespondierenden Datensende-/empfangseinrichtung einer Ladestation erkennen. Grundsätzlich lässt sich in Abhängigkeit von dem Batteriesatztyp eines Elektrofahrzeugs die Energieübertragung zu steuern, dass die Beladung des Batteriesatzes optimiert ist. Das Elektrofahrzeug kann dabei Informationen über seinen Batteriesatz über Datenaustausch der Ladestation bereitstellen. Die Energieübertragung lässt sich auch dahingehend steuern, dass die Lebensdauer eines Batteriesatzes optimiert wird. Beispielsweise lassen sich Regenerationszyklen und dergleichen einschieben. Über den Datenaustausch lassen sich beispielsweise auch Abrechnungsdaten der Ladestation und/oder dem Elektrofahrzeug bereitstellen. Durch entsprechende Auslesung ist dann eine Abrechnung auf einfache Weise möglich.

Die nachfolgende Beschreibung bevorzugter Ausführungsformen, dient im Zusammenhang mit den Zeichnungen der näheren Erläuterung der Erfindung. Es zeigen:
- Figur 1: Eine schematische Darstellung eines Ausführungsbeispiels eines erfindungsgemäßen Ladesystems;
- Figur 2: eine schematische Darstellung eines Fahrzeugs, welches an einer Ladestation positioniert ist;
- Figur 3: eine schematische Darstellung eines Ausführungsbeispiels eines Wechselrichters; und
- Figur 4: schematisch den Stromverlauf von Spannungsverlauf für den Wechselrichter gemäß Figur 3.

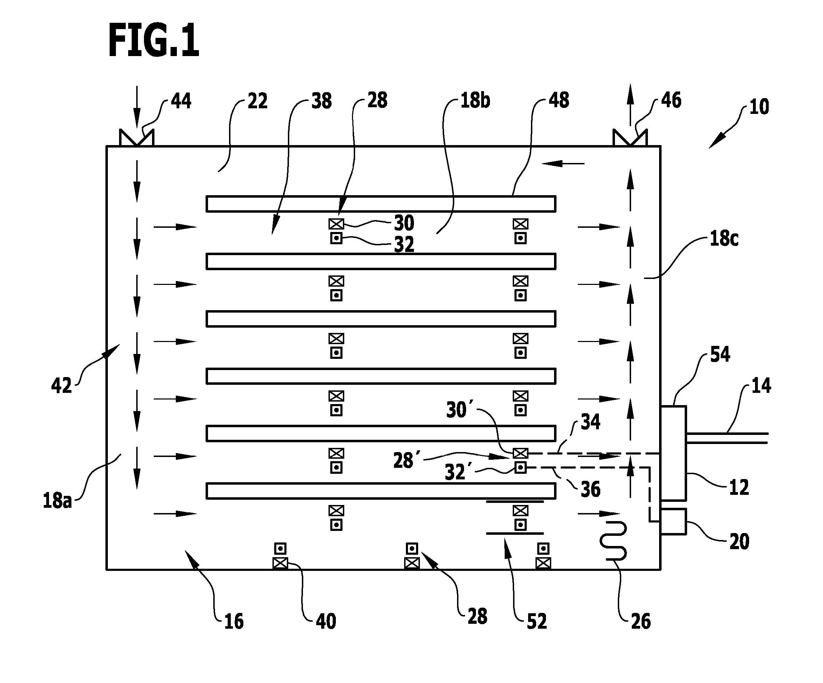

Ein Ausführungsbeispiel eines erfindungsgemäßen (elektrischen) Ladesystems, welches in Figur 1 schematisch gezeigt und dort mit 10 bezeichnet ist, umfasst eine zentrale Leistungsumrichtereinrichtung 12. Diese zentrale Leistungsumrichtereinrichtung 12 ist an ein Versorgungsnetz 14 und insbesondere öffentliches Versorgungsnetz 14 gekoppelt. Durch das Versorgungsnetz 14 wird der zentralen Leistungsumrichtereinrichtung 12 elektrische Energie mit einer 230/400 Volt Wechselspannung mit einer Frequenz von 50 Hz bereitgestellt.

Das Ladesystem 10 weist eine Einrichtung 16 auf, welche befahrbar ist. Die zentrale Leistungsumrichtereinrichtung 12 ist außerhalb von Fahrwegen 18a, 18b, 18c der Einrichtung 16 angeordnet. Insbesondere ist die zentrale Leistungsumrichtereinrichtung 12 an einem Rand der Einrichtung 16 angeordnet.

Das Ladesystem 10 umfasst ferner eine zentrale Datenverarbeitungseinrichtung 20, welche ebenfalls außerhalb von Fahrwegen 18a, 18b, 18c angeordnet ist. Die zentrale Datenverarbeitungseinrichtung 20 kann ihre Daten extern übertragen (und von extern Daten erhalten). Beispielsweise ist sie an das Internet gekoppelt.

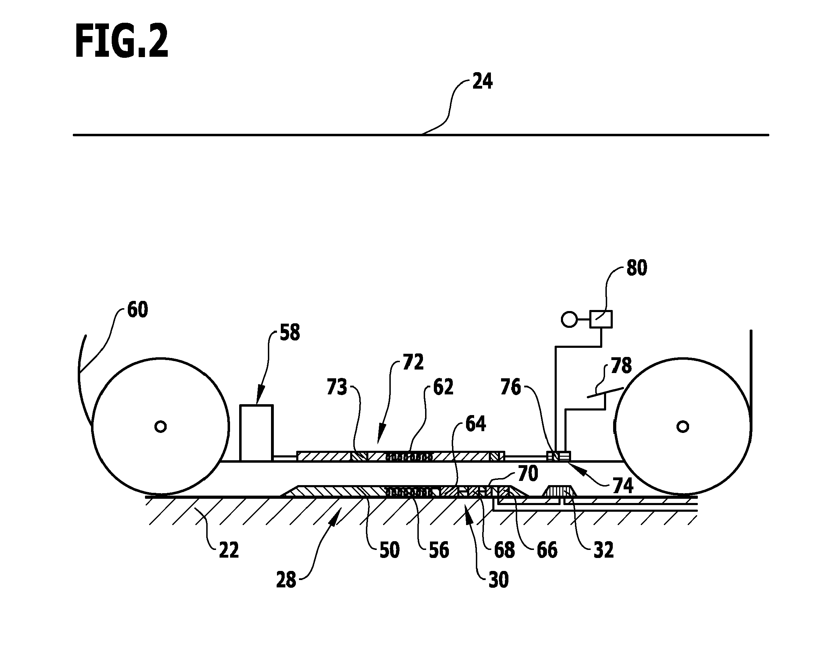

Die befahrbare Einrichtung 16 weist einen Boden 22 auf. Der Boden 22 (Figur 2) ist mit einem Dach 24 überdacht. Alternativ oder zusätzlich ist es möglich, insbesondere wenn kein Dach 24 vorhanden ist, dass der Boden 22 mit einer Bodenheizung versehen ist. Dies ist in Figur 1 mit dem Bezugszeichen 26 angedeutet.

Das Ladesystem 10 umfasst eine Mehrzahl von Ladestationen 28, welche an dem Boden 22 räumlich verteilt angeordnet sind und an Fahrwegen 18b liegen. Die Ladestationen 28 umfassen dabei jeweils eine elektrische Ladeeinrichtung 30, über welche ein Batteriesatz eines Elektrofahrzeugs aufladbar ist. Ferner umfasst eine Ladestation 28 eine Datensende-/empfangseinrichtung 32, über welche ein Datenaustausch zwischen der Ladestation 28 und einem Elektrofahrzeug möglich ist.

Die Ladeeinrichtungen 30 der Ladestationen 28 sind über Verbindungsleitungen 34 mit der zentralen Leistungsumrichtereinrichtung 12 verbunden. Dies ist in Figur 1 für eine Ladestation 28' mit Ladeeinrichtung 30' angedeutet. Auch für die weiteren Ladestationen 28 sind entsprechende Verbindungsleitungen 34 vorgesehen.

Die Datensende-/empfangseinrichtungen 32 der Ladestation 28 sind ebenfalls über Verbindungsleitungen 36 mit der zentralen Datenverarbeitungseinrichtung 20 verbunden. Es ist auch möglich, dass die Verbindung der Datensende-/empfangseinrichtungen 32 mit der zentralen Datenverarbeitungseinrichtung 20 drahtlos ist.

Die zentrale Leistungsumrichtereinrichtung 12 stellt den Ladeeinrichtungen 30 der Ladestation 28 elektrische Energie bereit. Die zentrale Leistungsumrichtereinrichtung 12 sorgt dabei für eine Umrichtung bezüglich Spannung und Frequenz. Insbesondere wird im Vergleich mit einer Netzspannung die elektrische Energie den Ladestationen 28 auf einem höheren Spannungsniveau beispielsweise in der Größenordnung von 1000 V bereitgestellt mit einer höheren Frequenz insbesondere im Bereich zwischen 20 kHz und 40 kHz. Von der zentralen Leistungsumrichtereinrichtung 12 werden dadurch im Vergleich zu Netzströmen Ströme kleiner Stromstärken mit höherer Frequenz übertragen. Dadurch sind Transportverluste verringert.

Die entsprechenden Verbindungsleitungen 34 sind insbesondere Hochspannungs-/Hochfrequenzkabel.

Die Verbindungsleitungen 34 und gegebenenfalls die Verbindungsleitungen 36 sind in dem Boden 22, welcher befahrbar ist, verlegt.

Die Ladestationen 28 sind an Warteplätzen 38 und/oder Parkplätzen 40 für Elektrofahrzeuge angeordnet.

Bei dem in Figur 1 gezeigten Ausführungsbeispiel ist das Ladesystem 10 in einer Halle 42 angeordnet, welche einen Eingang 44 und einen Ausgang 46 aufweist. In der Halle 42 sind eine Mehrzahl von Gepäckbändern 48 angeordnet. Jedem Gepäckband 48 sind zwei Warteplätze 38 und entsprechend zwei Ladestationen 28 zugeordnet. Mit diesem Ladesystem 10 kooperierende Elektrofahrzeuge sind insbesondere Transportfahrzeuge, welche Gepäckstücke zu den Gepäckbändern 48 bringen beziehungsweise von dort abholen.

Wenn ein Elektrofahrzeug zur Zuführung beziehungsweise Abholung von Gepäckstücken an einem Gepäckband 48 hält, dann hält es im Bereich einer Ladestation 28. Während des Gepäckstück-Entladens beziehungsweise Gepäckstück-Beladens eines Elektrofahrzeugs kann dann ein Batteriesatz des Elektrofahrzeugs elektrisch aufgeladen werden. Die Haltezeit wird effektiv genutzt.

Alternativ oder zusätzlich können auch Parkplätze 40 vorgesehen sein, welche außerhalb von üblichen Fahrwegen für Elektrofahrzeuge positioniert sind. Dortige Ladestationen 28 können beispielsweise benutzt werden, um eine Erstladung durchzuführen, oder um beispielsweise Ersatzfahrzeuge, die stets geladen sind, bereitzuhalten.

Insbesondere umfasst das Ladesystem 10 einen Satz von Elektrofahrzeugen.

Es ist aber auch möglich, wie untenstehend noch näher erläutert wird, dass "Fremdfahrzeuge" durch Ladestationen 28 wieder aufgeladen werden.

Die Ladestationen 28 umfassen insbesondere Kontaktplatten 50, wobei bei geeigneter Positionierung eines Elektrofahrzeugs zu einer Kontaktplatte 50 ein Batteriesatz des Elektrofahrzeugs aufladbar ist.

Bei einer bevorzugten Ausführungsform sind die Ladeeinrichtungen 30 und insbesondere die Kontaktplatten 50 in den Boden 22 derart integriert, dass sie überfahrbar sind.

Einer Ladestation 28 ist vorzugsweise eine Fahrzeugpositionierungseinrichtung 52 zugeordnet. Die Fahrzeugpositionierungseinrichtung 52 umfasst Hilfsmittel, um ein Elektrofahrzeug bezüglich einer Ladeeinrichtung 30 und insbesondere einer Kontaktplatte 50 korrekt zu positionieren und gegebenenfalls zu fixieren, so dass eine drahtlose Energieübertragung von der Ladeeinrichtung 30 auf das Elektrofahrzeug möglich ist. Die Ausbildung der Fahrzeugpositionierungseinrichtung 52 hängt von der Anwendung ab. Bei einer Ausführungsform umfasst sie Schienen zur Fahrzeugführung.

Es ist beispielsweise auch möglich, dass die Fahrzeugpositionierungseinrichtung 52 durch Mulden oder dergleichen im Boden 22 für Räder eines Elektrofahrzeugs zu dessen Ausrichtung bezüglich einer Ladeeinrichtung 30 ausgebildet ist.

Die zentrale Leistungsumrichtereinrichtung 12 ist vorzugsweise in einem abgeschirmten Raum 54 angeordnet.

Eine Ladeeinrichtung 30 einer Ladestation 28 umfasst eine Übertragungsspuleneinrichtung 56 (Figur 2), mittels welcher elektrische Energie drahtlos von der Ladestation 28 zu einem Batteriesatz 58 eines an der Ladestation positionierten Elektrofahrzeugs 60 übertragbar ist. Das Elektrofahrzeug 60 weist dazu eine Empfangsspuleneinrichtung 62 auf.

Die Ladeeinrichtung 30 umfasst ferner eine Schaltereinrichtung 64, durch welche schaltbar ist, ob die Übertragungsspuleneinrichtung 56 mit Strom versorgt ist oder nicht, das heißt, ob eine Energieübertragung stattfinden kann oder nicht. Die Ladeeinrichtung 30 umfasst ferner eine Datenverarbeitungseinrichtung 66, welche in Wirkverbindung mit der Datensende-/empfangseinrichtung 32 der entsprechenden Ladestation 28 steht. Sie umfasst weiterhin eine Sicherheitseinrichtung 68, welche in Verbindung mit der Schaltereinrichtung 64 steht. Die Sicherheitseinrichtung sorgt dafür, dass in kritischen Fällen der Strom zu der Übertragungsspuleneinrichtung 56 und damit die Energieübertragung abgeschaltet wird.

Die Sicherheitseinrichtung 68 umfasst dabei vorzugsweise eine Strommesseinrichtung, welche den Strom an der Übertragungsspuleneinrichtung 56 misst. Wenn beispielsweise der Strom eine bestimmte Schwelle überschreitet und/oder beispielsweise in einem bestimmten Zeitintervall zu stark ansteigt, sorgt die Sicherheitseinrichtung 68 über Einwirkung auf die Schaltereinrichtung 64 für eine Stromabschaltung, das heißt es wird der Stromfluss zu der Übertragungsspuleneinrichtung 56 unterbrochen.

Ferner umfasst eine Ladeeinrichtung 30 einen steuerbaren Umrichter 70, welcher die von der zentralen Leistungsumrichtereinrichtung 12 bereitgestellte elektrische Energie auf ein Spannungsniveau und/oder Frequenzniveau wandelt, welches für die kontaktlose Übertragung von elektrischer Energie von der Ladeeinrichtung 30 an ein Elektrofahrzeug 60 geeignet ist.

Eine Ankopplungseinrichtung 72 eines Elektrofahrzeugs 60 an eine Ladestation 28 umfasst, wie bereits oben erwähnt, die Empfangsspuleneinrichtung 72. Ferner umfasst die Ankopplungseinrichtung 72 einen Gleichrichter 73, welcher den Batteriesatz 58 insbesondere eine Gleichspannung bereitstellt.

Die Ankopplungseinrichtung 72 eines Elektrofahrzeugs 60 umfasst ferner eine Datensende-/empfangseinrichtung 74 für den Datenaustausch mit der entsprechenden Datensende-/empfangseinrichtung 32 einer Ladestation 28, wobei ein bidirektionaler Datenaustausch vorgesehen ist.

Ferner umfasst die Ankopplungseinrichtung 72 eines Elektrofahrzeugs 60 eine Datenverarbeitungseinrichtung 76, welche wirksam an die Datensende-/empfangseinrichtung 74 gekoppelt ist.

Bei einer Ausführungsform ist die Datenverarbeitungseinrichtung 76 an ein Pedal 78 wie Bremspedal und/oder Gaspedal des Elektrofahrzeugs 60 gekoppelt. Es lässt sich dann in Abhängigkeit von der Pedalbetätigung erkennen, ob das Elektrofahrzeug 60 fährt oder ruhend ist.

Alternativ oder zusätzlich ist es möglich, dass die Datenverarbeitungseinrichtung 76 an eine Zündschlüsseleinrichtung 80 des Elektrofahrzeugs 60 gekoppelt ist. Dadurch lässt sich durch die Datenverarbeitungseinrichtung 76 ebenfalls erkennen, ob das Elektrofahrzeug 60 ruht oder ob es sich bewegt beziehungsweise die Gefahr einer Bewegung besteht. Beispielsweise kann die Datenverarbeitungseinrichtung 76 nur dann ein Freigabesignal für die elektrische Energieübertragung für eine Ladestation 28 auf die Ankopplungseinrichtung 72 ermöglich, wenn ein Zündschlüssel von der Zündschlüsseleinrichtung 80 abgezogen ist, um sicherzustellen, dass sich das Elektrofahrzeug 60 während des Ladevorgangs nicht relativ zu der Ladestation 28 bewegen kann.

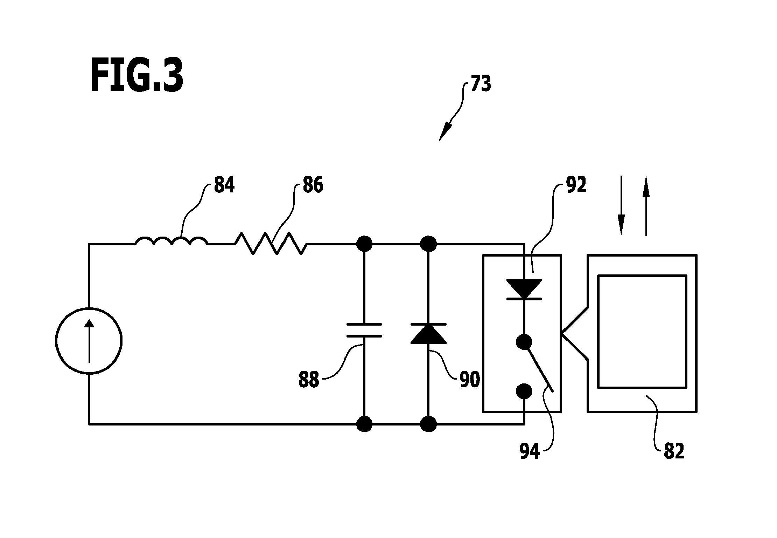

Ein Ausführungsbeispiel eines Gleichrichters 73, welcher in Figur 3 schematisch gezeigt ist, sorgt für eine induktive Ladungskumulation. Über einen Timer 82 ist für eine Ankopplung an eine Ladestation 28 gesorgt. Der Timer misst die Ankopplungszeit, um für eine effektive Beladung zu sorgen. Der Gleichrichter 73 umfasst dabei (in einem Ersatzschaltbild) eine Spuleneinrichtung 84 und eine dazu in Reihe geschaltete ohmsche Widerstandseinrichtung 86. Eine kapazitive Einrichtung 88 ist hierzu parallel geschaltet über eine Diode 90 zu gleicher Richtung. Eine weitere Diode 92 ist mit einem Schalter 94 ebenfalls parallel geschaltet.

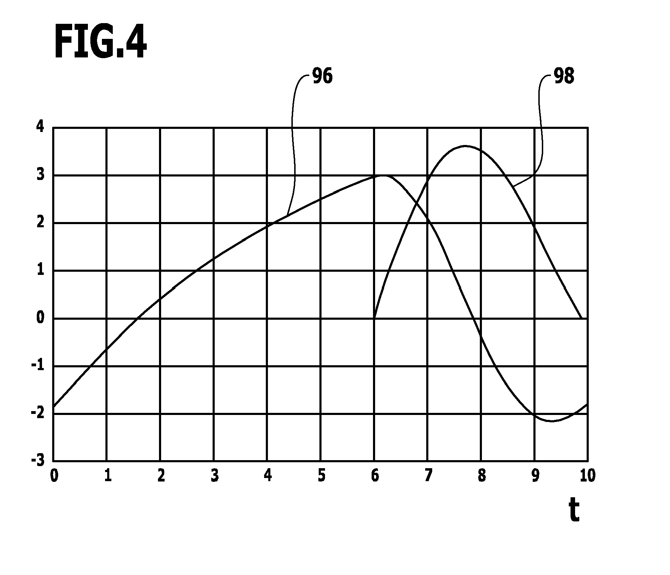

In Figur 4 ist ein Stromverlauf 96 und ein Spannungsverlauf 98 eines solchen Gleichrichters 73 über der Zeit gezeigt. Durch Zeitintegration ergibt sich gesteuert über den Timer 82 eine optimierte Beladung eines Batteriesatzes 58.

Das erfindungsgemäße Ladesystem 10 funktioniert wie folgt:

Die zentrale Leistungsumrichtereinrichtung 12 stellt den Ladeeinrichtungen 30 der Ladestation 28 elektrische Energie auf einem höheren Spannungsniveau und mit einer höheren Frequenz bereit als das Versorgungsnetz 14. Dadurch lässt sich elektrische Energie zu den Ladestationen 28 mit geringeren Verlusten transportieren.

Wenn ein Elektrofahrzeug über einer Ladestation 28 korrekt positioniert ist, wobei diese korrekte Positionierung und gegebenenfalls auch eine Fixierung einer korrekten Positionierung über die entsprechende Fahrzeugpositionierungseinrichtung 52 erfolgt, dann lässt sich beispielsweise während eines Wartevorgangs oder Parkvorgangs der Batteriesatz 58 des Elektrofahrzeugs 60 wieder aufladen. Der Ladevorgang erfolgt dabei berührungslos.

Der Datenaustausch zwischen dem Elektrofahrzeug 60 und einer Ladestation 28 ermöglicht eine technische Überwachung und eine kommerzielle Überwachung eines Ladevorgangs. Beispielsweise lässt sich ein Ladevorgang überwachen und steuern. Es können auch kommerzielle Daten bereitgestellt werden, beispielsweise zur Abrechnung.

Wenn ein Elektrofahrzeug 60 korrekt an einer Ladestation 28 positioniert ist, kann ein automatischer Ladevorgang durchgeführt werden, ohne dass ein Bediener eingreifen muss. Grundsätzlich können dadurch auch bedienerfreie Elektrofahrzeuge 60 wieder aufgeladen werden.

Es ist beispielsweise möglich, dass die Datensende-/empfangseinrichtung 74 Batteriesatzdaten an eine Ladestation 28 weitergibt. Aufgrund dieser Batteriesatzdaten kann dann entsprechend der Beladungsvorgang beispielsweise durch entsprechende Ansteuerung des Umrichters 70 auf den speziellen Batteriesatz abgestimmt werden.

Dadurch lässt sich das Ladesystem 10 für eine Vielzahl unterschiedlicher Batteriesätze ausrichten und das Ladesystem 10 ist flexibel.

Bei der erfindungsgemäßen Lösung lassen sich auch mehrere Elektrofahrzeuge 60 gleichzeitig wieder aufladen.

Grundsätzlich ist das erfindungsgemäße Ladesystem 10 vorteilhaft, wenn der Boden 22 überdacht ist und insbesondere in einer Halle 42 liegt. Aber auch für Böden 22 im Außenraum ist die erfindungsgemäße Lösung geeignet. Insbesondere ist dann eine Bodenheizung 26 vorgesehen, um an den Ladestationen 28 Wasseransammlung beziehungsweise Schnee und Eisansammlungen, die sonst die kontaktlose elektrische Energieübertragung stören oder verhindern könne, zu vermeiden.

Durch Ausbildung in Ladestationen 28 mit einer jeweiligen Kontaktplatte 50 lassen sich insbesondere die elektrischen und elektronischen Komponenten der Ladeeinrichtungen 30 gegen Beschädigung beziehungsweise gegen Einfluss der Umgebung schützen.

Die Datenverarbeitungseinrichtung 66 einer Ladestation 28 und/oder die Datenverarbeitungseinrichtung 76 eines Elektrofahrzeugs 60 umfassen insbesondere einen Speicher, um bestimmte Daten fest speichern zu können. Die Datensende-/empfangseinrichtung 74 sowie Datensende-/empfangseinrichtung 32 gegebenenfalls mit Datenverarbeitungseinrichtung 76 beziehungsweise Datenverarbeitungseinrichtung 66 lässt sich beispielsweise in einem RFID-Chip integrieren.

Die zentrale Leistungsumrichtereinrichtung 12 ist gleichzeitig mit allen Ladestationen 28 des Ladesystems 10 verbunden.

Die Ladeeinrichtungen 30 sind dabei insbesondere über die Schaltereinrichtung 64 in einem solchen Zustand, dass bei nicht korrekt positioniertem Elektrofahrzeug 60 die Übertragungsspuleneinrichtung 56 keine elektrische Energie abgeben kann und insbesondere die Stromzufuhr zu der Übertragungsspuleneinrichtung 56 unterbrochen ist; die Übertragungsspuleneinrichtung 56 steht dann nicht unter Spannung. Die Steuerung der Energieübertragung kann dabei so erfolgen, dass zunächst eine korrekte Positionierung eines Elektrofahrzeugs 60 bezüglich der Ladestation 28 notwendig ist, eine Batteriesatzerkennung durchgeführt wird und erst wenn der Batteriesatz 58 korrekt erkannt wurde, eine kontaktlose elektrische Energieübertragung erfolgt.

Die Sicherheitseinrichtung 68 misst insbesondere die fließenden Ströme. Leistungsschwankungen oder auch Spannungsschwankungen beziehungsweise Unterbrechungen der Leistungsübertragung, welche eine bestimmte Schwelle überschreiten, führen durch Betätigung der Schaltereinrichtung 64 sofort zu einem Abbruch der Energieübertragung. Solche Schwankungen können beispielsweise durch Bewegen des Elektrofahrzeugs 60 verursacht werden.

Der Datenaustausch mit dem Elektrofahrzeug 60 kann auch dahingehend überprüft werden, ob das Elektrofahrzeug 60 Bewegungszustände oder mögliche Bewegungszustände dieses Elektrofahrzeugs 60 meldet. In diesem Falle sorgt die Sicherheitseinrichtung 68 für eine sofortige Unterbrechung der Stromzufuhr.

Es ist auch möglich, wenn das Losfahren eines Elektrofahrzeugs 60 durch Zündschlüsselbetätigung und/oder Teilbetätigung erkannt wird, auf das Elektrofahrzeug 60 zurückgegriffen wird und die Abfahrt zeitlich verzögert wird, um ein kontrolliertes Beenden des Ladevorgangs und der Datenspeicherung zu ermöglichen.

In dem Speicher der Datenverarbeitungseinrichtung 76 lassen sich beispielsweise Abrechnungsdaten bezüglich der elektrischen Energieübertragung speichern. Es lassen sich auch Daten bezüglich Ort und Zeit der Wiederaufladung speichern. Es können auch Stördaten gespeichert werden.

Über den Datenaustausch lässt sich auch das Ladeverfahren selber steuern. Beispielsweise erfolgt eine Steuerung einer Ladestromhöhe und eines Ladestromverlaufs. Auch an dem Elektrofahrzeug 60 lässt sich über die Ankopplungseinrichtung 72 der Beladungsvorgang des Batteriesatzes 58 überwachen und es lässt sich eine Rückmeldung an die Ladestation 28 abgeben.

Für bestimmte Batteriesätze 58 lassen sich auch individuelle Teilladungskonzepte realisieren. Beispielsweise lässt sich das Verhältnis von Konstantladezyklen zu Schnellladezyklen berücksichtigen, es lassen sich notwendige Regenerationszyklen berücksichtigen, es lässt sich eine Halteladungsnotwendigkeit berücksichtigen usw. Da über den Datenaustausch zwischen dem Elektrofahrzeug 60 und einer Ladestation 28 grundsätzlich jeder Ladevorgang detailliert überwachbar ist und die entsprechenden Daten insbesondere im Speicher der Datenverarbeitungseinrichtung 76 des Elektrofahrzeugs 60 speicherbar sind, lässt sich eine genaue Ladegeschichte des Elektrofahrzeugs 60 speichern und dadurch lässt sich über die Lebensdauer des Batteriesatzes 58 die Beladung optimieren.

Das Ladesystem 10 muss, wenn beispielsweise neuartige Batteriesatztechnologien und auch Spannungsniveaus eingesetzt werden, höchstens in geringem Umfange angepasst werden. Über eine entsprechende Ansteuerbarkeit des Umrichters 70 lässt sich eine solche Anpassung insbesondere softwaremäßig durchführen.

Durch die erfindungsgemäße Lösung lassen sich unproduktive Ladezyklen minimieren. Der Bedienaufwand ist minimiert.

Die erfindungsgemäße Lösung lässt sich auf vorteilhafte Weise für den innerbetrieblichen Warenverkehr beziehungsweise Güterverkehr beziehungsweise Personenverkehr nutzen. Es lässt sich dort insbesondere ein geschlossenes System bereitstellen, wobei Wartezeiten beziehungsweise Parkzeiten optimiert für die elektrische Beladung nutzbar sind.

Das Ladesystem 10 lässt sich beispielsweise für Anwendungen in einem Flughafen-Vorfeldbetrieb, für einen kommunalen Fuhrparkbetrieb, Freizeitparks, Golfplätze, Messegesellschaften, Bahnhöfe, Kateringbetriebe usw. einsetzen. Es lässt sich auch in der Produktion für die Produktzufuhr und Abfuhr einsetzen usw.

### BEZUGSZEICHENLISTE

- 10: Ladesystem
- 12: Zentrale Leistungsumrichtereinrichtung
- 14: Versorgungsnetz
- 16: Befahrbare Einrichtung
- 18a: Fahrweg
- 18b: Fahrweg
- 18c: Fahrweg
- 20: Zentrale Datenverarbeitungseinrichtung
- 22: Boden
- 24: Dach
- 26: Bodenheizung
- 28: Ladestation
- 28': Ladestation
- 30: Ladeeinrichtung
- 30': Ladeeinrichtung
- 32: Datensende-/empfangseinrichtung
- 32': Datensende-/empfangseinrichtung
- 34: Verbindungsleitung
- 36: Verbindungsleitung
- 38: Warteplatz
- 40: Parkplatz
- 42: Halle
- 44: Eingang
- 46: Ausgang
- 48: Gepäckband
- 50: Kontaktplatte
- 52: Fahrzeugpositioniereinrichtung
- 54: Abgeschirmter Raum
- 56: Übertragungsspuleneinrichtung
- 58: Batterienetz
- 60: Elektrofahrzeug
- 62: Empfangsspuleneinrichtung
- 64: Schaltereinrichtung
- 66: Datenverarbeitungseinrichtung
- 68: Sicherheitseinrichtung
- 70: Umrichter
- 72: Ankopplungseinrichtung
- 73: Gleichrichter
- 74: Datensende-/empfangseinrichtung
- 76: Datenverarbeitungseinrichtung
- 78: Pedal
- 80: Zündschlüsseleinrichtung
- 82: Timer
- 84: Spuleneinrichtung
- 86: Widerstandseinrichtung
- 88: Kapazitive Einrichtung
- 90: Diode
- 92: Diode
- 94: Schalter
- 96: Stromverlauf
- 98: Spannungsverlauf

## Patentansprüche

1. Ladesystem für Elektrofahrzeuge (60), umfassend eine zentrale Leistungsumrichtereinrichtung (12) und eine Mehrzahl von räumlich verteilten Ladestationen (28) mit jeweiligen Ladeeinrichtungen (30), wobei die jeweiligen Ladeeinrichtungen (30) von der zentralen Leistungsumrichtereinrichtung (12) mit elektrischer Energie versorgt sind, eine Ladestation (28) zur kontaktlosen elektrischen Energieübertragung an ein Elektrofahrzeug (60) ausgebildet ist, eine Ladestation (28) eine Datensende-/empfangseinrichtung (32) für den Datenaustausch mit einem Elektrofahrzeug (60) umfasst, eine Ladestation (28) eine Datenverarbeitungseinrichtung (66) umfasst, welche mit einer Datensende-/empfangseinrichtung (32) in Wirkverbindung steht, und eine Ladestation (28) einen Umrichter (70) umfasst.

2. Ladesystem für Elektrofahrzeuge nach Anspruch 1, **dadurch gekennzeichnet, dass** die zentrale Leistungsumrichtereinrichtung (12) an ein Versorgungsnetz (14) gekoppelt ist, und insbesondere dass die zentrale Leistungsumrichtereinrichtung (12) den Ladeeinrichtungen (30) elektrische Leistung auf einem höheren Spannungsniveau und/oder mit einer höheren Frequenz bereitstellt im Vergleich zum Versorgungsnetz (14), und insbesondere dass die zentrale Leistungsumrichtereinrichtung (12) Spannungen auf einem Spannungsniveau im Bereich zwischen 500 V und 1500 V bereitstellt, und insbesondere dass die zentrale Leistungsumrichtereinrichtung (12) den Ladeeinrichtungen (30) elektrische Energie einer Frequenz im Bereich zwischen 10 kHz und 60 kHz bereitstellt.

3. Ladesystem für Elektrofahrzeuge nach einem der vorangehenden Ansprüche, **dadurch gekennzeichnet, dass** die Ladeeinrichtungen (30) in einen befahrbaren Boden (22) integriert sind.

4. Ladesystem für Elektrofahrzeuge nach einem der vorangehenden Ansprüche, **dadurch gekennzeichnet, dass** Verbindungsleitungen (34) zwischen der zentralen Leistungsumrichtereinrichtung (12) und den Ladestationen (28) und/oder Verbindungsleitungen (36) für Daten in einem Boden (22) verlegt sind.

5. Ladesystem für Elektrofahrzeuge nach Anspruch 3 oder 4, **dadurch gekennzeichnet, dass** der Boden (22) mindestens im Bereich der Ladestationen (28) mit einer Bodenheizung (26) versehen ist und/oder überdacht ist.

6. Ladesystem für Elektrofahrzeuge nach einem der vorangehenden Ansprüche, **dadurch gekennzeichnet, dass** einer Ladestation (28) eine Fahrzeugpositionierungseinrichtung (52) zugeordnet ist.

7. Ladesystem für Elektrofahrzeuge nach einem der vorangehenden Ansprüche, **dadurch gekennzeichnet, dass** die zentrale Leistungsumrichtereinrichtung (12) in einem abgeschirmten Raum (54) angeordnet ist.

8. Ladesystem für Elektrofahrzeuge nach einem der vorangehenden Ansprüche, **gekennzeichnet durch** eine zentrale Datenverarbeitungseinrichtung (20).

9. Ladesystem für Elektrofahrzeuge nach einem der vorangehenden Ansprüche, **dadurch gekennzeichnet, dass** eine Ladestation (28) eine Schaltereinrichtung (64) zum Einschalten und Abschalten der Ladestation (28) bezüglich der Bereitstellung von elektrischer Energie zu einem Elektrofahrzeug (60) umfasst.

10. Ladesystem für Elektrofahrzeuge nach einem der vorangehenden Ansprüche, **dadurch gekennzeichnet, dass** eine Ladestation (28) eine Übertragungsspuleneinrichtung (56) zur drahtlosen Energieübertragung umfasst.

11. Ladesystem für Elektrofahrzeuge nach einem der vorangehenden Ansprüche, **dadurch gekennzeichnet, dass** eine Ladestation (28) eine Sicherheitseinrichtung (68) aufweist, welche eine Strom- und/oder Spannungsmesseinrichtung umfasst und welche eine Schaltereinrichtung (64) zur Unterbrechung des Stromflusses umfasst.

12. Ladesystem für Elektrofahrzeuge nach einem der vorangehenden Ansprüche, **dadurch gekennzeichnet, dass** ein Elektrofahrzeug (60) eine Empfangsspuleneinrichtung (62) für die elektrische Leistungsübertragung aufweist, und insbesondere dass ein Elektrofahrzeug (60) einen Gleichrichter (73) aufweist.

13. Ladesystem für Elektrofahrzeuge nach einem der vorangehenden Ansprüche, **dadurch gekennzeichnet, dass** ein Elektrofahrzeug (60) eine Datensende-/empfangseinrichtung (74) zum Datenaustausch mit einer Ladestation (28) aufweist.

14. Ladesystem für Elektrofahrzeuge nach einem der vorangehenden Ansprüche, **dadurch gekennzeichnet, dass** ein Elektrofahrzeug (60) eine Datenverarbeitungseinrichtung (76) aufweist.

15. Verfahren zum Laden von Elektrofahrzeugen, bei dem eine zentrale Leistungsumrichtereinrichtung, welche an ein Versorgungsnetz gekoppelt ist, an räumlich verteilte Ladestationen unter Spannungserhöhung und Frequenzerhöhung im Vergleich zu dem Versorgungsnetz elektrische Energie liefert, und ein Elektrofahrzeug an einer Ladestation kontaktlos elektrische Energie entnehmen kann, wobei an einer Ladestation ein Datenaustausch mit dem Elektrofahrzeug durchgeführt wird und der Datenaustausch mindestens einen der folgenden Datentypen umfasst: Freigabe und Abschaltung der Energieübertragung, Steuerung der Energieübertragung, Batteriesatzdaten, Bewegung des Elektrofahrzeuges, Abrechnungsdaten.
